# FASCICULE DE BREVET EUROPEEN

(11) **EP 3 286 028 B1**
(45) Date de publication et mention de la délivrance du brevet: **08.09.2021**
(21) Numéro de dépôt: 16719038.8
(22) Date de dépôt: 08.04.2016
(51) Int. Cl.: B60J 5/04

(54) **POUTRE DE RENFORT EXTRUDEE A DEFORMATION PROGRAMMEE**
EXTRUDIERTE VERSTÄRKUNGSTRÄGER MIT PRÄPARIERTER VERFORMUNG
EXTRUDED REINFORCEMENT BEAM WITH PREPARED DEFORMATION

(30) Priorité: 20.04.2015 FR 1553483
(43) Date de publication de la demande: 28.02.2018
(73) Titulaire: PSA Automobiles SA, 78300 Poissy (FR); Constellium Singen GmbH, 78224 Singen (DE)
(72) Inventeur: FIGOLI, David, 78490 Méré (FR); MESARIC, Stéphane, 92350 Le Plessis Robinson (FR); DROUOT, Laurent, 91280 Saint Pierre Du Perray (FR); LANGE, Christian, 8224 Löhningen (CH)
(74) Mandataire: Fernandez, Francis Lionel
(86) Numéro de dépôt international: PCT/EP2016/057853
(87) Numéro de publication internationale: WO 2016/169794

(56) Documents cités:
- EP-A1- 0 395 621
- EP-A1- 0 467 829
- EP-A1- 0 872 291
- WO-A1-91/10582
- DE-C1- 19 653 959
- US-A- 5 431 445
- US-A1- 2006 028 052
- US-A1- 2006 249 342
- US-B2- 7 748 507

## Description

L'invention concerne une poutre de renfort pour véhicule, en particulier une poutre de renfort de porte destinée à limiter les intrusions dans l'habitacle en cas de choc latéral. Afin d'améliorer la protection en cas de choc, les véhicules automobiles comportent des poutres dans certaines parties de leur structure. Ces poutres permettent de transférer l'énergie du choc vers des parties de la structure du véhicule sur lesquelles les poutres sont fixées, et ainsi de limiter les intrusions dans l'espace derrière ladite poutre. De telles poutres sont utilisées par exemple dans les portes latérales de véhicule où elles sont communément appelées poutre de renfort de choc latéral. Dans une porte, une poutre de renfort de choc latéral s'étend entre le bord avant et le bord arrière de la doublure de la porte, dans des zones situées de préférence en face d'éléments de la structure du véhicule, comme par exemple le pied avant et le pied milieu du véhicule dans le cas d'une porte avant. Ainsi, en cas de choc latéral, les efforts du choc sont transmis par la poutre de renfort de choc latéral aux éléments de structure du véhicule que sont le pied avant et le pied milieu. L'inconvénient de ces poutres est qu'elles se déforment essentiellement au niveau du point d'impact lors du choc, générant des intrusions importantes dans l'habitacle. Les documents EP 0 872 291, et US 7 748 507 sont regardés comme l'art antérieur.

Afin de contrôler la déformation de la poutre de renfort, le brevet EP0510060 propose une poutre de renfort réalisée par extrusion, d'épaisseur variable dans la longueur du profilé et de section sensiblement rectangulaire. L'épaisseur de paroi la plus importante se situe au milieu de la longueur du profilé; la paroi la plus épaisse s'étend de part et d'autre et constitue la zone d'impact. Cette zone d'impact est délimitée par deux entailles situées sur la même face et sensiblement perpendiculaires à l'axe longitudinal de la poutre, de manière à réduire localement la rigidité de ladite poutre. Ainsi, en cas de choc latéral, la poutre va se plier d'abord au niveau de ces entailles. Cette conception permet de réduire la flèche de la poutre en cas de choc, et donc les intrusions dues au choc. Les entailles sont réalisées au moment de l'extrusion de la poutre par réduction de l'épaisseur d'une des parois de ladite poutre obtenue par un déplacement d'un élément au niveau de la tête d'extrusion lors de l'extrusion du profilé.

Cette poutre est complexe à réaliser car elle nécessite un outil particulier au niveau de la tête d'extrusion pour modifier les épaisseurs des parois de la poutre au moment de l'opération d'extrusion.

La présente invention a pour but de proposer un procédé de fabrication simple à mettre en œuvre pour réaliser une poutre de renfort comportant au moins une zone de faiblesse. Un autre objectif est de proposer une poutre de renfort comportant au moins une zone de faiblesse qui soit simple à réaliser.

Ce but est atteint selon l'invention définie par la revendication de procédé 1 et la revendication de produit 3, grâce à un procédé de fabrication d'une poutre de renfort pour véhicule comportant au moins une zone de faiblesse agencée de manière à ce que la résistance de la poutre à la flexion est plus faible au niveau de ladite zone de faiblesse que dans le reste de la poutre comportant dans l'ordre
- une étape d'extrusion d'un profilé,
- une étape de découpe du profilé de manière à obtenir au moins un segment de profilé,
- une étape de déformation localisée du segment de profilé destinée à créer la ou les zones de faiblesse, caractérisé en ce que l'étape de déformation localisée du segment de profilé est réalisé par déchirement localisé dans l'une des parois latérales de la poutre en même temps qu'une opération de galbage dudit segment de profilé par formage destinée à donner une courbure à ladite poutre.

Ainsi, la fabrication d'une telle poutre est simple, et ne nécessite pas de développer des outils de fabrication complexes. A partir d'un profilé de section constante obtenu par extrusion, l'obtention d'une poutre comportant au moins une zone de faiblesse est obtenue par l'ajout d'une étape simple et rapide de déformation localisée du profilé. Cette étape de déformation localisée peut être réalisée par un poinçon qui déchire localement le profilé ou de manière préférée par un outil qui déforme plastiquement le profilé. Cette étape de déformation localisée modifie localement la géométrie de la section du profilé, par exemple en modifiant la surface de la section du segment de profilé, la section désignant ici la section perpendiculaire à la direction d'extrusion.

Dans un mode de réalisation préféré de l'invention, l'étape d'extrusion forme un profilé avec un plan de symétrie s'étendant le long de son axe longitudinal, et en ce que l'opération de découpe est réalisée de manière à obtenir au moins deux segments de profilé symétriques deux à deux.

Ainsi, dans le cas de segments de profilé destinés à réaliser la poutre de renfort de porte de véhicule, cette symétrie entre deux segments de profilé permet de réaliser une poutre de renfort pour une porte positionnée sur un des côtés du véhicule à partir de l'un desdits segments, et une poutre de renfort pour la porte située sur l'autre côté du véhicule à partir de l'autre segment de profilé, en minimisant les chutes de découpes. Les découpes peuvent être réalisées par exemple en biseau.

Dans un mode de réalisation avantageux, la découpe peut être agencée de manière à ce que le segment de profilé créé soit symétrique par rapport à un plan perpendiculaire à l'axe longitudinal dudit segment de profilé et passant par le milieu de sa longueur. Ainsi, chaque segment de profilé obtenu est identique en minimisant les chutes.

Ainsi, la création des zones de faiblesse est obtenue sans rajouter d'opération dans le procédé de fabrication de la poutre de renfort. En effet, les poutres de renfort sont généralement galbées. C'est en particulier le cas pour une poutre de renfort pour une porte de véhicule, car une porte de véhicule comporte un panneau extérieur qui est galbé. Pour suivre la forme du panneau extérieur au plus près, la position dans la porte de la poutre nécessite que ladite poutre soit galbée. Après l'extrusion du profilé et découpe du segment de profilé, une seconde opération est appliquée pour galber ledit segment. Ce galbage est obtenu par formage dans un outil de cintrage comportant une matrice et un poinçon. Il est alors économiquement intéressant de profiter de cette opération pour créer les zones de faiblesse en adaptant la forme de la matrice et du poinçon pour déformer localement le segment de profilé, et ainsi obtenir la poutre de renfort.

La déformation visée pour créer les zones de faiblesse peut s'exprimer en pourcentage de variation d'une dimension de segment de profilé.

Le pourcentage de variation d'une dimension de segment du profilé est alors typiquement d'au moins 5% par rapport à cette dimension initiale du profilé, préférentiellement d'au moins 10% et plus préférentiellement d'au moins 15%.

On peut également exprimer la déformation pour créer les zones de faiblesse par la réduction du diamètre du cercle dans lequel s'inscrit la section du profilé, typiquement d'au moins 2% par rapport au diamètre initial du cercle dans lequel s'inscrit la section du profilé dans le plan perpendiculaire à la direction d'extrusion, préférentiellement d'au moins 5% et plus préférentiellement d'au moins 10%.

On obtient ainsi de manière très simple et à faible coût une poutre de renfort comportant une ou des zones de faiblesse à partir d'un profilé réalisé par extrusion.

L'invention porte aussi sur une poutre de renfort pour véhicule comportant au moins une zone de faiblesse agencée de manière à ce que la résistance de la poutre à la flexion est plus faible au niveau de ladite zone de faiblesse que dans le reste de la poutre, la poutre étant galbée et la zone de faiblesse étant obtenue par déchirement localisé dans l'une des parois latérales de la poutre, ladite poutre de renfort étant obtenue par le procédé décrit précédemment.

Dans un mode de réalisation de la poutre de renfort objet de l'invention, ladite poutre de renfort comporte deux zones de faiblesse réparties sur la longueur de ladite poutre.

La présence de deux zones de faiblesse permet de diminuer la flèche de la poutre lorsqu'un effort est appliqué au milieu de sa longueur.

Dans un mode de réalisation de la poutre de renfort objet de l'invention, la section de ladite poutre de renfort est creuse.

La poutre est ainsi particulièrement légère tout en étant résistante. De plus, elle peut être plus facilement localement déformée pour créer les zones de faiblesse.

Dans un mode de réalisation de la poutre de renfort objet de l'invention, ladite poutre est formée de deux parois latérales, de préférence parallèles et reliées entre-elles par au moins une paroi de liaison.

Dans ce mode de réalisation de la poutre de renfort objet de l'invention, l'une des parois latérales peut comporter la ou les zones de faiblesses.

De préférence, la poutre est un corps creux. Avantageusement, dans ce mode de réalisation préférée, les parois latérales constituant les contours extérieurs du corps creux peuvent être reliées entre elles par une ou plusieurs parois de liaisons. De manière préférée, cette ou ces parois de liaison ne sont pas perpendiculaires aux parois latérales et dans le cas où il y a plusieurs parois de liaison, ces parois de liaison ne sont pas parallèles entre elles.

Dans un mode de réalisation de la traverse de renfort objet de l'invention, la ou les zones de faiblesses se situent sur une génératrice des parois latérales.

L'invention porte aussi sur une porte de véhicule comportant au moins une poutre de renfort décrite précédemment.

L'invention porte aussi sur un véhicule comportant au moins une poutre de renfort telle que décrite précédemment.

L'invention sera mieux comprise à la lecture de la description qui va suivre, donnée uniquement à titre d'exemple et faite en se référant aux dessins annexés, sur lesquels :
- La fig. 1 est une représentation des étapes du procédé de fabrication d'une poutre suivant l'invention.
- La fig. 2 est une vue d'un profilé droit dont les extrémités ont été coupées en biseau.
- La fig. 3 est une vue en perspective d'une poutre de renfort réalisée à partir du profilé de la fig. 2 et présentant deux zones de faiblesse.
- La fig. 4 est une vue d'une section de profilé ayant servi à réaliser le segment de poutre représenté à la figure 5 et 6.
- La fig. 5 est une vue en coupe d'une poutre de renfort avec une zone de faiblesse.
- La fig. 6 est une vue en coupe d'une poutre de renfort avec deux zones de faiblesse.
- La fig. 7 est une vue en coupe de la poutre de renfort présentée à la figure 5, dans une partie ne présentant pas de zone de faiblesse (coupe D-D) et une partie représentative de la zone de faiblesse (coupe E-E).

Les dessins sont des représentations schématiques pour faciliter la compréhension de l'invention. Les composants ne sont pas forcément représentés à l'échelle. Les mêmes références correspondent aux mêmes composants d'une figure à l'autre.

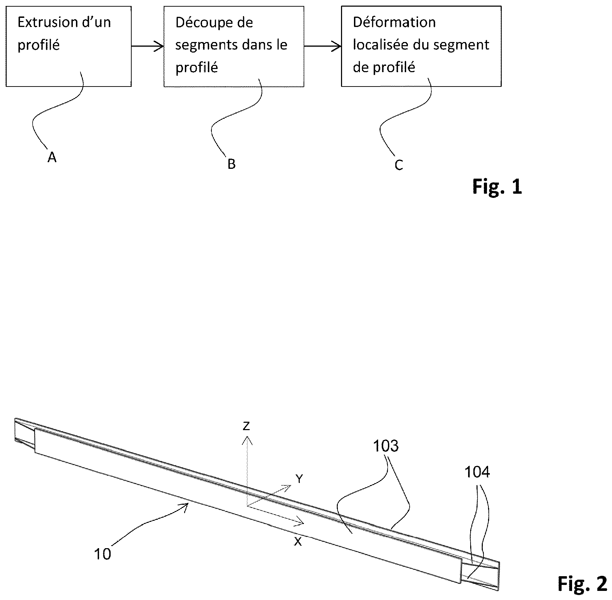

La fig. 1 schématise le procédé de fabrication d'une poutre de renfort selon l'invention. Il comporte une première étape A d'extrusion d'un profilé, suivi d'une étape B de découpe d'un segment de profilé à la longueur désirée, puis une étape C de déformation localisée du segment de profilé; avantageusement l'étape C comporte également une étape de galbage.

L'étape A d'extrusion produit un profilé de longueur supérieure à la longueur de la poutre de renfort qui sera réalisée. Ensuite, le profilé est découpé dans l'étape B pour obtenir un segment sensiblement de la longueur de la poutre de renfort qui sera réalisée.

Ensuite, une ou plusieurs zones de faiblesse sont créées de manière à réduire localement la résistance à la flexion du segment de profilé au cours d'une étape de déformation localisée C du segment de profilé. La déformation peut être réalisée par déchirement localisé ou de manière préférée par enfoncement du profilé. Cette étape de déformation localisée C du segment de profilé peut être réalisée en même temps qu'une étape dans laquelle le segment de profilé est galbé et/ou sa forme modifiée de manière à créer une poutre de renfort dont la forme est adaptée à son utilisation. Par exemple, dans le cadre d'une poutre de renfort pour une porte de véhicule comportant un panneau extérieur galbé, la poutre peut être galbée de manière à suivre le galbe de dudit panneau extérieur de la porte. Pour mettre en forme le segment de profilé, celui-ci peut être placé dans un outil de formage constitué d'une matrice et d'un poinçon, outil qui, en se refermant, déforme le segment et forme ainsi la poutre de renfort. L'outil de formage comporte alors les formes appropriées pour venir poinçonner et déformer le segment de profilé à l'endroit ou aux endroits souhaités de manière à créer la ou les zones de faiblesse.

Dans une variante, l'étape C peut comporter plusieurs sous-étapes, une sous-étape mettant en forme l'ensemble du segment de profilé, par exemple en le galbant, et une sous-étape déformant localement par écrasement le segment de profilé pour créer la ou les zones de faiblesse.

Des étapes complémentaires peuvent être réalisées entre les étapes A, B ou C, ou après l'étape C comme par exemple de manière non limitative, des traitements de surface, des traitements thermiques, ou encore des perçages ou sertissages d'écrous.

La fig. 2 montre le segment de profilé 10 après l'étape B de découpe et avant l'étape C de déformation localisée et de galbage. Le segment de profilé 10 comporte deux parois latérales 103 parallèles entre elles. Deux parois de fermeture 104 s'étendent entre les parois latérales 103 de manière à former un corps creux. Dans le mode de réalisation décrit par la fig.2, les parois de fermeture 104 sont sensiblement parallèles entre elles et sensiblement perpendiculaires aux parois latérales 103.

De préférence, on choisira un profilé ayant un plan de symétrie s'étendant le long de son axe longitudinal. Les segments de profilé 10 sont obtenus en découpant le profilé à des longueurs identiques et de manière à obtenir des segments de profilé 10 qui soient au moins symétriques deux à deux. Par exemple, en définissant un repère formé par trois axes X, Y et Z, dont l'axe X est parallèle à l'axe longitudinal du profilé et les axes X et Y sont perpendiculaires entre eux et perpendiculaires à l'axe Z, , la forme de la section du profilé est de préférence choisie de manière à ce que le profilé soit symétrique par rapport à un plan parallèle au plan XY passant à mi-longueur de la paroi latérale et le segment de profilé 10 est obtenu en faisant des découpes suivant des plans parallèles à un même plan contenant l'axe Z et symétriques par rapport à un plan perpendiculaire à l'axe X.

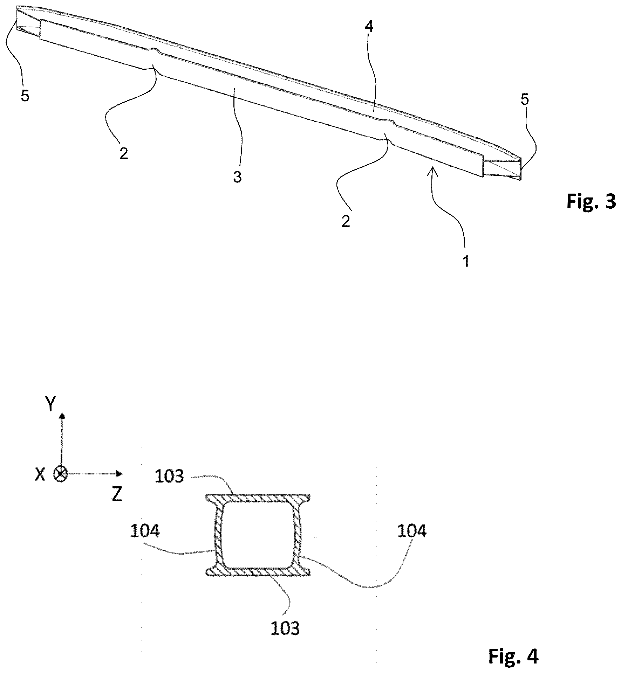

La fig. 3 montre une poutre de renfort 1 formée à partir du segment de profilé 10 illustré en fig. 2. La poutre 1 comporte des parois latérales 3 correspondant aux parois latérales 103 du segment de profilé 10, et des parois de liaisons 4 correspondant aux parois de liaison 104 dudit segment de profilé. La poutre 1 comporte deux zones de faiblesse 2 réalisées par déformation localisée de la poutre sur l'une des parois latérales 3. La déformation est réalisée par écrasement localisé de la poutre de manière à créer un enfoncement sur ladite surface latérale 3. Ces zones de faiblesse 2 réduisent la résistance à la flexion de la poutre de renfort 1. Dans le cas d'une poutre de renfort 1 destinée à être installée dans une porte de véhicule comportant un panneau extérieur galbé, et afin de suivre la forme du panneau extérieur, la poutre de renfort 1 est galbée. Ce galbe est réalisé en déformant le segment de profilé 10 de la fig. 2 à l'aide d'un outil de formage constitué d'une matrice et d'un poinçon, définissant une empreinte de la poutre de renfort 1 dans laquelle est placé ledit segment de profilé 10. La fermeture dudit outil de formage va donner le galbe de la poutre de renfort 1. L'empreinte comporte en outre des protubérances qui permettent d'écraser localement la poutre 1 de manière à former les zones de faiblesse 2.

En variante, la poutre de renfort 1 peut ne comporter qu'une seule zone de faiblesse. Dans une autre variante, la poutre de renfort 1 comporte deux zones de faiblesse 2 ou plus de deux zones de faiblesse 2.

Dans une autre variante, la ou les zones de faiblesse 2 peuvent être réalisées par un poinçonnage qui déchire ou coupe au moins en partie l'une des parois 3 ou 4 de la poutre de renfort 1.

En variante, la section de la poutre de renfort 1 peut être de forme différente, comme par exemple de section circulaire, ovale, triangulaire, ou de forme plus complexe. Ladite poutre 1 peut aussi être de section pleine.

La poutre de renfort 1 peut être réalisée en aluminium ou alliage d'aluminium, en magnésium ou alliage de magnésium. Dans un mode de réalisation préférée, l'alliage d'aluminium est un alliage de la série 6000, plus préférentiellement l'alliage 6082. Dans un mode de réalisation préférée, la limite d'élasticité Rp0.2 de l'alliage d'aluminium, mesurée par un essai de traction selon la norme ISO 6892-1 est au moins de 250 MPa, préférentiellement supérieure à 320 MPa. Dans le cas d'une poutre de renfort 1 pour une porte de véhicule, la ou les zones de faiblesse 2 sont disposées de préférence du côté de la poutre 1 orientée vers l'extérieur du véhicule lorsque la poutre de renfort 1 est installée sur la porte et la porte sur le véhicule. Ainsi, en cas de choc latéral contre le véhicule, la poutre va se déformer en pliant au niveau de la ou des zones de faiblesse 2 situées de préférence entre le milieu de la longueur de la poutre de renfort 1 et l'une des extrémités de ladite poutre de renfort 1, ce qui va permettre de diminuer la distance sur laquelle la poutre de renfort 1 se déforme. Les intrusions dans l'habitacle du véhicule sont ainsi diminuées.

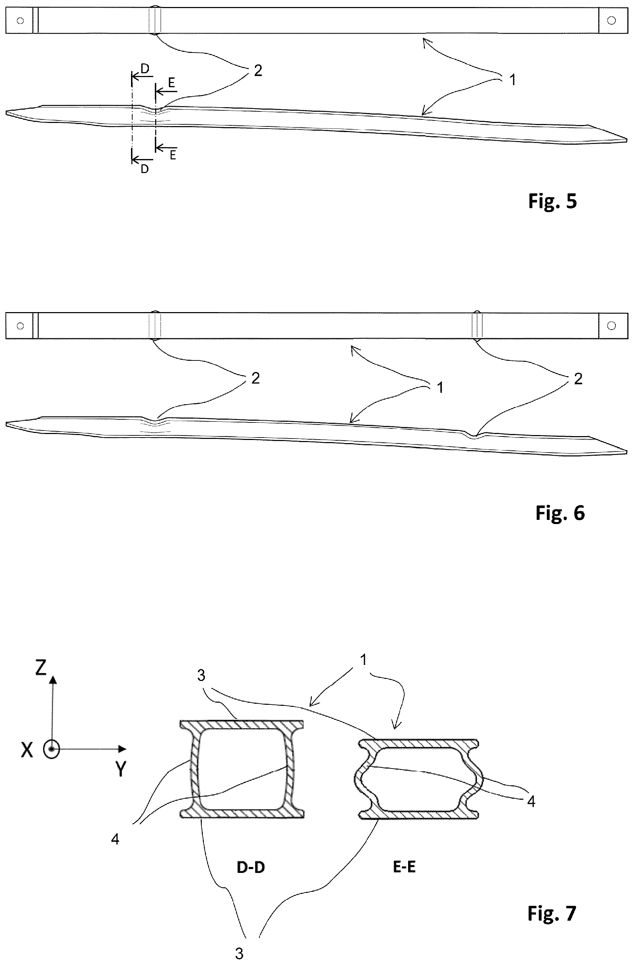

La fig. 4 représente la section du profilé 10 servant à réaliser les poutres de renfort 1 représentées aux fig. 5 et 6. Le profilé comporte deux parois latérales 103 parallèles entre elles et d'épaisseur 2,5 mm et deux parois de fermeture 104 d'épaisseur 2 mm. La hauteur du profilé, c'est-à-dire sa dimension entre les faces des deux parois latérales, est de 30 mm.

La fig. 5 représente une poutre de renfort 1 avec une seule zone de faiblesse 2 réalisée selon l'invention. La zone de faiblesse 2 est localisée dans le premier tiers de la longueur de la poutre de renfort 1. Elle est réalisée par déformation localisée en même temps que l'opération de galbage. La vue en coupe de la zone de faiblesse 2 est représentée à la fig. 7 et correspond à la coupe E-E repérée à la fig. 5. La coupe D-D aussi visible à la fig. 7 correspond à une partie de la poutre de renfort 1 ne subissant pas de déformation pendant l'opération de galbage. La coupe D-D est similaire à la section représentée à la fig. 4 correspondant à la section initiale du profilé. La déformation localisée réduit la hauteur du profilé de 5 mm, ce qui correspond à une réduction de hauteur de 17%.

La fig. 6 représente une poutre de renfort 1 avec deux zones de faiblesse 2 réalisées selon l'invention. Une première zone de faiblesse 2 est localisée dans le premier tiers de la longueur de la poutre de renfort 1 et la seconde zone de faiblesse 2 est localisée dans le troisième tiers de la longueur de la poutre de renfort 1. Cette poutre de renfort 1 se distingue géométriquement de la poutre de renfort 1 représentée à la fig. 5 par la seule seconde zone de faiblesse.

La présence de la ou des zones de faiblesse 2 permet de réduire l'intrusion dans l'habitacle. Cela constitue un intérêt dans la sécurité des passagers.

## Revendications

1. Procédé de fabrication d'une poutre de renfort (1) pour véhicule comportant au moins une zone de faiblesse (2) agencée de manière à ce que la résistance de la poutre (1) à la flexion est plus faible au niveau de ladite zone de faiblesse (2) que dans le reste de la poutre (1), comportant dans l'ordre :
- une étape d'extrusion (A) d'un profilé
- une étape de découpe (B) du profilé de manière à obtenir au moins un segment de profilé (10)
- une étape de déformation (C) localisée du segment de profilé (10) destinée à créer la ou les zones de faiblesse (2).
**caractérisé en ce que** l'étape de déformation localisée (C) du segment de profilé est réalisé par déchirement localisé dans l'une des parois latérales (3) de la poutre (1) en même temps qu'une opération de galbage dudit segment de profilé (10) par formage destinée à donner une courbure à ladite poutre (1).

2. Procédé suivant la revendication 1 **caractérisé en ce que** ce l'étape d'extrusion (A) forme un profilé avec un plan de symétrie s'étendant le long de son axe longitudinal, et **en ce que** l'opération de découpe (B) est réalisée de manière à obtenir au moins deux segments de profilé (10) symétriques deux à deux.

3. Poutre de renfort (1) pour véhicule comportant au moins une zone de faiblesse (2) agencée de manière à ce que la résistance de la poutre (1) à la flexion est plus faible au niveau de ladite zone de faiblesse (2) que dans le reste de la poutre (1), la poutre (1) étant galbée et la zone de faiblesse (2) étant obtenue par déchirement localisé dans l'une des parois latérales (3) de la poutre (1), ladite poutre (1) de renfort étant obtenue par le procédé suivant l'une des revendications 1 à 2.

4. Poutre de renfort (1) suivant la revendication 3 **caractérisée en ce qu'**elle comporte deux zones de faiblesse (2) réparties sur la longueur de ladite poutre (1).

5. Poutre de renfort (1) suivant l'une des revendications 3 ou 4 **caractérisée en ce que** sa section est creuse.

6. Poutre de renfort (1) suivant l'une des revendications 3 à 5 **caractérisée en ce qu'**elle est formée de deux parois latérales parallèles (3) et reliées entre-elles par au moins une paroi de liaison (4).

7. Poutre de renfort suivant la revendication 6 **caractérisée en ce que** l'une des parois latérales (3) comporte la ou les zones de faiblesses (2).

8. Porte de véhicule comportant une poutre de renfort (1) suivant l'une des revendications de 3 à 7.

9. véhicule comportant une poutre de renfort (1) suivant l'une des revendications de 3 à 7 ou une porte suivant la revendication 8.

## Patentansprüche

1. Verfahren zur Herstellung eines Fahrzeugverstärkungsbalkens (1) mit mindestens einem Schwächungsbereich (2), der so angeordnet ist, dass der Biegewiderstand des Balkens (1) an dem Schwächungsbereich (2) geringer ist als im übrigen Balkbereich (1), der in der Reihenfolge Folgendes aufweist:
- einem Extrusionsschritt (A) eines Profils
- einen Schritt zum Schneiden (B) des Profils, um mindestens ein Profilsegment (10) zu erhalten
- einen örtlich begrenzten Verformungsschritt (C) des Profilsegments (10) zur Erzeugung des oder der Schwächungsbereiche (2).
**Dadurch gekennzeichnet, dass** der Schritt der örtlich begrenzten Verformung (C) des Profilsegments durch Aufreißen in einer der Seitenwände (3) des Trägers (1) gleichzeitig mit einem Verwalzen des Profilsegments (10) durch Formen zur Krümmung des Trägers (1) ausgeführt wird.

2. Verfahren nach Anspruch 1, **dadurch gekennzeichnet, dass** der Extrusionsschritt (A) ein Profil mit einer entlang seiner Längsachse verlaufenden Symmetrieebene bildet und dass der Schneidvorgang (B) so ausgeführt wird, dass mindestens zwei symmetrische Profilsegmente (10) zwei bis zwei erhalten werden.

3. Fahrzeug-Verstärkungsbalken (1) mit mindestens einem Schwächungsbereich (2), der so angeordnet ist, dass der Biegewiderstand des Balkens (1) an dem Schwächungsbereich (2) geringer ist als im übrigen Balkbereich (1), wobei der Balkenträger (1) verdreht und der Schwächungsbereich (2) durch Aufreißen in einer der Seitenwandungen (3) des Balkens erhalten wird (1), wobei der Verstärkungsträger (1) durch das Verfahren nach einem der Ansprüche 1 bis 2 erhalten wird.

4. Verstärkungsträger (1) nach Anspruch 3, **dadurch gekennzeichnet, dass** er zwei Schwächungsbereiche (2) aufweist, die über die Länge des Trägers (1) verteilt sind.

5. Verstärkungsträger (1) nach einem der Ansprüche 3 oder 4, **dadurch gekennzeichnet, dass** sein Querschnitt hohl ist.

6. Verstärkungsträger (1) nach einem der Ansprüche 3 bis 5, **dadurch gekennzeichnet, dass** er aus zwei parallelen Seitenwänden (3) gebildet ist, die durch mindestens eine Verbindungswand (4) miteinander verbunden sind.

7. Verstärkungsbalken nach Anspruch 6, **dadurch gekennzeichnet, dass** eine der Seitenwände (3) den oder die Schwachstellenbereiche (2) aufweist.

8. Fahrzeugtür mit einem Verstärkungsbalken (1) nach einem der Ansprüche 3 bis 7.

9. Fahrzeug mit einem Verstärkungsbalken (1) nach einem der Ansprüche 3 bis 7 oder einer Tür nach Anspruch 8.

## Claims

1. Process for the manufacture of a reinforcement beam (1) for a vehicle having at least one weakness zone (2) arranged so that the strength of the beam (1) at bending is lower at the level of that weakness zone (2) than in the rest of the beam (1), having in order:
- an extrusion step (A) of a profile
- a cutting step (B) of the profile so as to obtain at least one segment of the profile (10)
- a localized deformation stage (C) of the profile segment (10) designed to create the weakness area(s) (2).
**characterized in that** the localized deformation stage (C) of the profile segment is carried out by localized stripping in one of the lateral walls (3) of the beam (1) at the same time as a stacking operation of the profile segment (10) by forming to give a curvature to the beam (1).

2. Process following Claim 1 **characterized in that** the extrusion step (A) forms a profile with a plane of symmetry extending along its longitudinal axis, and **in that** the cutting operation (B) is performed in such a way as to obtain at least two symmetrical segments (10), two to two.

3. Reinforcement hose (1) for a vehicle with at least one weakness area (2) arranged so that the strength of the beam (1) to the bending is lower at the level of that weakness area (2) than in the rest of the beam (1), the beam (1) being curved and the weakness area (2) being obtained by tearing located in one of the side walls (3) of the beam (1), the reinforcement beam (1) being obtained by the process following one of the claims 1 to 2.

4. Reinforcement hose (1) following Claim 3 **characterized in that** it has two zones of weakness (2) distributed over the length of the said beam (1).

5. Reinforcement hose (1) following one of the claims 3 or 4 characterized as its section is hollow.

6. Reinforcement hose (1) in accordance with one of claims 3 to 5 **characterized in that** it is composed of two parallel lateral walls (3) and connected between them by at least one binding wall (4).

7. Reinforcing crest according to Claim 6 **characterized in that** one of the side walls (3) contains the area(s) of weakness (2).

8. Vehicle door with reinforcement beam (1) following one of the claims from 3 to 7.

9. vehicle with reinforcement beam (1) following one of the claims from 3 to 7 or a door following the claim 8.
